# EUROPÄISCHE PATENTSCHRIFT

(11) **EP 2 931 584 B1**
(45) Veröffentlichungstag und Bekanntmachung des Hinweises auf die Patenterteilung: **31.01.2018**
(21) Anmeldenummer: 13798319.3
(22) Anmeldetag: 28.11.2013
(51) Int. Cl.: B60W 10/18, B60W 10/184, B60W 10/20, B60W 30/04, B62D 6/00, B62D 13/00, B60W 30/02

(54) **VERFAHREN UND VORRICHTUNG ZUR STABILISIERUNG EINES AUS EINEM ZUGFAHRZEUG UND EINEM ANHÄNGER BESTEHENDEN FAHRZEUGGESPANNS**
METHOD AND DEVICE FOR STABILIZING A VEHICLE COMBINATION CONSISTING OF A TOWING VEHICLE AND A TRAILER
PROCÉDÉ ET DISPOSITIF POUR LA STABILISATION D'UN TRAIN ROUTIER CONSTITUÉ D'UN VÉHICULE TRACTEUR ET D'UNE REMORQUE

(30) Priorität: 12.12.2012 DE 102012222862
(43) Veröffentlichungstag der Anmeldung: 21.10.2015
(73) Patentinhaber: Robert Bosch GmbH, 70442 Stuttgart (DE)
(72) Erfinder: BEISSWENGER, Markus, 74523 Schwaebisch Hall (DE); BAUST, Benjamin, 71691 Freiberg/Neckar (DE); HAEUSSLER, Thomas, 74653 Kuenzelsau-Vogelsberg (DE)
(86) Internationale Anmeldenummer: PCT/EP2013/074934
(87) Internationale Veröffentlichungsnummer: WO 2014/090578

(56) Entgegenhaltungen:
- DE-A1- 10 342 865
- DE-A1-102004 010 296
- DE-A1-102005 028 787
- DE-A1-102007 008 342
- DE-A1-102007 061 835

## Beschreibung

### Stand der Technik

Aus der DE 10 2005 028 787 A1 ist ein System zur Gespannstabilisierung bekannt. Dieses umfasst eine Fahrzeuglenkung mit Lenkerunterstützung und eine Einrichtung zur Erkennung von kritischen Anhängerschwingungen. Bei Erkennung einer kritischen Anhängerschwingung erfolgt ein temporärer Eingriff in die Fahrzeuglenkung zur Gespannstabilisierung. Dieser kann passiv erfolgen, d.h. ohne eine vom Fahrer nicht beabsichtigte Lenkbewegung. Möglich ist jedoch auch ein aktiver Eingriff in die Lenkung im Sinne einer tatsächlichen Lenkbewegung. Hierdurch wird die Fahrsicherheit beim Führen von Gespannen erhöht. Dieses System eignet sich besonders für Personenkraftfahrzeuge. Die DE 103 42 865 A1 offenbart ein Verfahren gemäß dem Oberbegriff des unabhängigen Anspruchs 1.

### Offenbarung der Erfindung

Die Erfindung betrifft ein Verfahren zur Stabilisierung eines aus einem Zugfahrzeug und einem Anhänger bestehenden Fahrzeuggespanns bei Schlingerbewegungen, bei dem
- das Vorliegen einer Schlingerbewegung des Zugfahrzeugs detektiert wird,
- nach Überschreiten eines ersten Schwellenwertes durch die Amplitude einer die Schlingerbewegung kennzeichnenden oszillierenden Schlingergröße ein fahrerunabhängiger Lenkungseingriff in die Lenkaktuatorik des Zugfahrzeugs erfolgt und
- nach Überschreiten eines zweiten Schwellenwertes durch die Amplitude der Schlingergröße ein fahrerunabhängiger Bremseingriff in die Bremsaktuatorik des Zugfahrzeugs erfolgt,
- wobei der zweite Schwellenwert höher als der erste Schwellenwert gewählt ist.

Durch die gestufte Vorgehensweise wird eine für den Fahrer besonders komfortable Gespannstabilisierung ermöglicht. Erfindungsgemäß wird der Lenkungseingriff nur durchgeführt, wenn das zeitliche Anwachsen des Amplitudenwertes der Schlingergröße so langsam ist, dass die Amplitudendifferenz zweier aufeinanderfolgender Schwingungen einen Schwellenwert nicht überschreitet.
Eine vorteilhafte Ausgestaltung der Erfindung ist dadurch gekennzeichnet, dass der fahrerunabhängige Lenkungseingriff eine Verhärtung der Lenkung in Richtung der oszillierenden Schlingergröße bzw. Gierratenschwingung darstellt. Durch die Verhärtung der Lenkung findet eine wirkungsvolle Dämpfung der vom Fahrer ungewollten Gierschwingungen des Fahrzeugs statt.
Eine vorteilhafte Ausgestaltung der Erfindung ist dadurch gekennzeichnet, dass der fahrerunabhängige Lenkungseingriff ein Lenküberlagerungsmoment darstellt, welches jeweils entgegengesetzt der momentanen Richtung der oszillierenden Schlingergröße bzw. Gierratenschwingung gerichtet ist. Durch dieses Lenküberlagerungsmoment wird der Fahrer angeleitet, phasenrichtig gegen die oszillierende Schlingergröße zu lenken.
Eine vorteilhafte Ausgestaltung der Erfindung ist dadurch gekennzeichnet, dass es sich bei der Schlingergröße um die Differenz zwischen der Soll-Gierrate und der Ist-Gierrate des Zugfahrzeugs handelt. Diese Größen werden im Rahmen eines Fahrdynamikregelungssystems ohnehin erfasst und stehen deshalb ohne großen Zusatzaufwand zur Verfügung.
Eine andere vorteilhafte Ausgestaltung der Erfindung ist dadurch gekennzeichnet, dass es sich bei der Schlingergröße um die Ist-Gierrate des Zugfahrzeugs handelt.
Eine vorteilhafte Ausgestaltung der Erfindung ist dadurch gekennzeichnet, dass der fahrerunabhängige Bremsgriff ein symmetrisches Bremsen des linken und rechten Rades wenigstens einer Fahrzeugachse darstellt. Damit wird eine gleichmäßige und rasche Verzögerung des Fahrzeugs erreicht bis die Fahrzeuggeschwindigkeit unter einen Schwellenwert sinkt, unterhalb von dem kein Anhängerpendeln mehr möglich ist.

Eine vorteilhafte Ausgestaltung der Erfindung ist dadurch gekennzeichnet, dass der fahrerunabhängige Bremseingriff ein wechselseitiges Bremsen des linken und rechten Rades wenigstens einer Fahrzeugachse darstellt, wobei die Phasenlage des wechselseitigen Bremsens so gewählt wird, dass das durch den Bremseingriff erzeugte oszillierende Giermoment um ungefähr 180 Grad phasenversetzt zu der oszillierenden Schlingergröße ist. Damit wird das durch das Schlingern entstehende Giermoment kompensiert und der Anhänger stabilisiert sich wieder.

Eine vorteilhafte Ausgestaltung der Erfindung ist dadurch gekennzeichnet, dass der erste Schwellenwert so niedrig gewählt ist, dass noch keine kritische Schlingersituation für das Fahrzeuggespann vorliegt. Damit besteht eine hohe Wahrscheinlichkeit, dass allein durch die Lenkeingriffe eine Stabilisierung des Gespanns möglich ist und damit eine für den Fahrer weniger komfortable Stabilisierung durch geschwindigkeitsmindernde Bremseingriffe vermieden wird.

Weiter umfasst die Erfindung eine Vorrichtung, insbesondere ein Steuergerät, enthaltend Mittel, die zur Durchführung der erfindungsgemäßen Verfahren ausgestaltet sind. Unter dem Begriff der Mittel ist dabei insbesondere der Programmcode der erfindungsgemäßen Verfahren zu verstehen.

Die Zeichnung umfasst die Figuren 1 bis 3.
Fig. 1 zeigt den Zeitverlauf einer schnell aufklingenden Schwingung mit einem Amplitudensprung.
Fig. 2 zeigt eine langsam aufklingende Schwingung und die Regelbereiche für die Stabilisierung durch Bremsmaßnahmen und die Stabilisierung durch Lenkmaßnahmen.
Fig. 3 zeigt als Flussdiagramm den Ablauf einer Ausführungsform des erfindungsgemäßen Verfahrens.

Wichtig für die Erfindung ist die robuste und frühzeitige Erkennung von Gespannschlingersituationen, welche durch dämpfende Lenkeingriffe stabilisiert werden können. Solche Fahrsituationen liegen dann vor, wenn die vom Anhänger aufgebrachte Gierratenamplitude des Fahrzeugs nur langsam anwächst und keine Sprünge enthält.

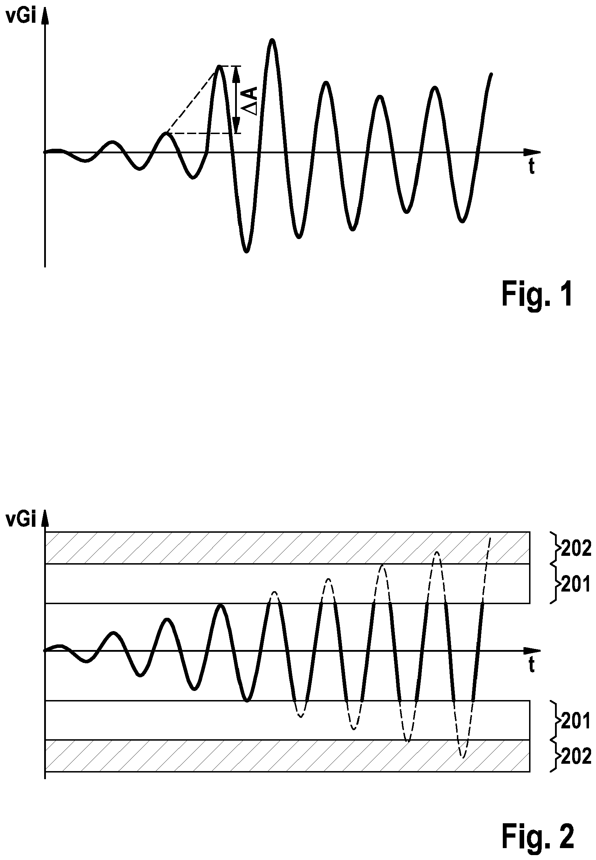

In Figur 1 ist beispielhaft eine schnell anwachsende Schwingung mit einem Amplitudensprung dargestellt. Dazu ist in Abszissenrichtung die Zeit t aufgetragen und in Ordinatenrichtung die Gierrate vGi des Zugfahrzeugs. Deutlich ist der Amplitudensprung ΔA zu erkennen, welcher ein schnelles Aufklingen der Schwingung kennzeichnet.

Die Anregelschwelle der stabilisierenden Lenkeingriffe liegt unterhalb der Anregelschwelle für Bremseingriffe, wodurch eine komfortable Stabilisierung des Gespanns ermöglicht wird und gleichzeitig kritische Situationen verhindert werden können. Dies ist in Fig. 2 dargestellt. Dort ist in Abszissenrichtung die Zeit t aufgetragen, in Ordinatenrichtung die Gierrate vGi des Zugfahrzeugs. Weiter sind in Figur 2 die beiden Gierratenbandbereiche 201 und 202 eingezeichnet. Liegt die Amplitude der Gierratenschwingung im Bereich 201, dann werden Lenkeingriffe zur Schwingungsdämpfung eingesetzt. Wächst die Amplitude jedoch noch weiter an und liegt im Bereich 202, dann werden stabilisierende Bremseingriffe eingesetzt.

Für die Lenkeingriffe zur Lenkunterstützung eignen sich verschiedene Eingriffsstrategien:
- die Lenkung wird temporär in diejenige Richtung verhärtet, welche entgegengesetzt dem durch die Gierratenschwingung induzierten Lenkmoment gerichtet ist. Dadurch bleibt der Lenkwinkel unbeeinflusst von der Gierbewegung des Fahrzeugs.
- Ein Überlagerungslenkmoment wird als Lenkempfehlung in der Form vorgegeben, dass das Gespann stabilisiert wird, wenn der Fahrer der Empfehlung folgt.

Durch eine gleichzeitige oder nachgelagerte Verzögerung des Gespanns bis unter eine kritische Geschwindigkeit können harte Bremseingriffe vermeiden werden. Stattdessen kann die Verzögerung wahlweise durch Motormomentenanpassungen oder leichte Bremseingriffe hervorgerufen werden.

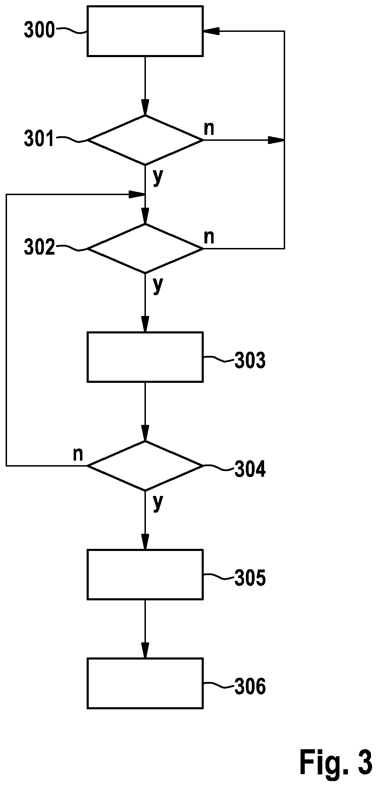

In Fig. 3 ist der Ablauf des erfindungsgemäßen Verfahrens dargestellt. Nach dem Start des Verfahrens in Block 300 wird in Block 301 das Vorliegen einer Schlingerbewegung des Zugfahrzeugs detektiert. Liegt keine Schlingerbewegung vor, dann wird zu Block 300 zurückgegangen. Liegt eine Schlingerbewegung vor, dann wird in Block 302 abgefragt, ob deren Amplitude einen ersten Schwellenwert überschreitet. Ist dies nicht der Fall, dann wird zu Block 300 zurückgekehrt. Ist dies jedoch der Fall, dann wird in Block 303 ein fahrerunabhängiger Lenkungseingriff in die Lenkaktuatorik des Zugfahrzeugs durchgeführt. In Block 304 wird danach abgefragt, ob die Amplitude der Schlingergröße einen zweiten Schwellenwert überschreitet. Ist dies nicht der Fall, dann wird zum Eingang von Block 302 zurückgesprungen. Ist dies jedoch der Fall, dann erfolgt in Block 305 ein fahrerunabhängiger Bremseingriff in die Bremsaktuatorik des Zugfahrzeugs. Der zweite Schwellenwert ist dabei größer als der erste Schwellenwert. In Block 306 endet das Verfahren.

## Patentansprüche

1. Verfahren zur Stabilisierung eines aus einem Zugfahrzeug und einem Anhänger bestehenden Fahrzeuggespanns bei Schlingerbewegungen, bei dem
- das Vorliegen einer Schlingerbewegung des Zugfahrzeugs detektiert wird (301),
- nach Überschreiten eines ersten Schwellenwertes durch die Amplitude einer die Schlingerbewegung kennzeichnenden oszillierenden Schlingergröße ein fahrerunabhängiger Lenkungseingriff in die Lenkaktuatorik des Zugfahrzeugs erfolgt (303) und
- nach Überschreiten eines zweiten Schwellenwertes durch die Amplitude der Schlingergröße ein fahrerunabhängiger Bremseingriff in die Bremsaktuatorik des Zugfahrzeugs erfolgt (305),
- wobei der zweite Schwellenwert höher als der erste Schwellenwert gewählt ist,
**dadurch gekennzeichnet, dass** der Lenkungseingriff nur durchgeführt wird, wenn das zeitliche Anwachsen des Amplitudenwertes der Schlingergröße so langsam ist, dass die Amplitudendifferenz zweier aufeinanderfolgender Schwingungen einen Schwellenwert nicht überschreitet.

2. Verfahren nach Anspruch 1, **dadurch gekennzeichnet, dass** der fahrerunabhängige Lenkungseingriff eine Verhärtung der Lenkung in Richtung der Schlingergröße darstellt.

3. Verfahren nach Anspruch 1, **dadurch gekennzeichnet, dass** der fahrerunabhängige Lenkungseingriff ein Lenküberlagerungsmoment darstellt, welches jeweils entgegengesetzt der momentanen Richtung der Schlingergröße gerichtet ist.

4. Verfahren nach Anspruch 1, **dadurch gekennzeichnet, dass** es sich bei der Schlingergröße um die Differenz zwischen der Soll-Gierrate und der Ist-Gierrate des Zugfahrzeugs handelt.

5. Verfahren nach Anspruch 1, **dadurch gekennzeichnet, dass** es sich bei der Schlingergröße um die Ist-Gierrate des Zugfahrzeugs handelt.

6. Verfahren nach Anspruch 1, **dadurch gekennzeichnet, dass** der fahrerunabhängige Bremsgriff ein symmetrisches Bremsen des linken und rechten Rades wenigstens einer Fahrzeugachse darstellt.

7. Verfahren nach Anspruch 1, **dadurch gekennzeichnet, dass** der fahrerunabhängige Bremseingriff ein wechselseitiges Bremsen des linken und rechten Rades wenigstens einer Fahrzeugachse darstellt, wobei die Phasenlage des wechselseitigen Bremsens so gewählt wird, dass das durch den Bremseingriff erzeugte oszillierende Giermoment um ungefähr 180 Grad phasenversetzt zu der oszillierenden Schlingergröße ist.

8. Verfahren nach Anspruch 1, **dadurch gekennzeichnet, dass** der erste Schwellenwert so niedrig gewählt ist, dass noch keine kritische Schlingersituation für das Fahrzeuggespann vorliegt.

9. Vorrichtung, enthaltend Mittel, die zur Durchführung der Verfahren nach einem der Ansprüche 1 bis 8 ausgestaltet sind.

## Claims

1. Method for stabilizing a vehicle combination, composed of a tractor vehicle and trailer, during rolling movements, in which
- the presence of a rolling movement of the tractor vehicle is detected (301),
- after a first threshold value has been exceeded by the amplitude of an oscillating rolling movement variable which characterizes the rolling movement a steering intervention which is independent of the driver into the steering actuator system of the tractor vehicle takes place (303) and
- after a second threshold value has been exceeded by the amplitude of the rolling movement variable, a braking intervention which is independent of the driver into the braking actuator system of the tractor vehicle takes place (305),
- wherein the second threshold value is selected to be higher than the first threshold value,
**characterized in that** the steering intervention is carried out only if the increase in the amplitude value of the rolling movement variable over time is so slow that the difference in amplitude between two successive rolling movements does not exceed a threshold value.

2. Method according to Claim 1, **characterized in that** the steering intervention which is independent of the driver constitutes hardening of the steering in the direction of the rolling movement variable.

3. Method according to Claim 1, **characterized in that** the steering intervention which is independent of the driver constitutes a steering superimposed torque which is respectively directed in the opposite direction to the instantaneous direction of the rolling movement variable.

4. Method according to Claim 1, **characterized in that** the rolling movement variable is the difference between the set point yaw rate and the actual yaw rate of the tractor vehicle.

5. Method according to Claim 1, **characterized in that** the rolling movement variable is the actual yaw rate of the tractor vehicle.

6. Method according to Claim 1, **characterized in that** the braking intervention which is independent of the driver constitutes symmetrical braking of the left-hand and right-hand wheel of at least one vehicle axle.

7. Method according to Claim 1, **characterized in that** the braking intervention which is independent of the driver constitutes alternating braking of the left-hand and right-hand wheels of at least one vehicle axle, wherein the phase position of the alternating braking is selected such that the oscillating yaw moment which is generated by the braking intervention is phase shifted with respect to the oscillating rolling movement variable by approximately 180 degrees.

8. Method according to Claim 1, **characterized in that** the first threshold value is selected to be so low that there is still no critical rolling movement situation for the vehicle combination.

9. Device containing means which are configured to carry out the method according to one of Claims 1 to 8.

## Revendications

1. Procédé pour stabiliser un attelage de véhicule constitué d'un véhicule tracteur et d'une remorque lors de mouvements de roulis, dans lequel
- la présence d'un mouvement de roulis du véhicule tracteur est détectée (301),
- après dépassement d'une première valeur seuil par l'amplitude d'une grandeur de roulis produisant une oscillation et caractérisant le mouvement de roulis, une intervention de la direction indépendante du conducteur se produit (303) dans le système d'actionneur de direction du véhicule tracteur et
- après dépassement d'une deuxième valeur seuil par l'amplitude de la grandeur de roulis, une intervention de freinage indépendante du conducteur se produit (305) dans le système d'actionneur de freinage du véhicule tracteur,
- la deuxième valeur seuil étant supérieure à la première valeur seuil,
**caractérisé en ce que** l'intervention de direction est effectuée seulement si l'augmentation dans le temps de la valeur de l'amplitude de la grandeur de roulis est suffisamment lente pour que la différence d'amplitude entre deux oscillations successives ne dépasse pas une valeur seuil.

2. Procédé selon la revendication 1, **caractérisé en ce que** l'intervention de direction indépendante du conducteur constitue un durcissement de la direction dans la direction de la grandeur de roulis.

3. Procédé selon la revendication 1, **caractérisé en ce que** l'intervention de direction indépendante du conducteur constitue un couple de superposition de direction qui est orienté dans chaque cas dans un sens opposé à la direction momentanée de la grandeur de roulis.

4. Procédé selon la revendication 1, **caractérisé en ce que** la grandeur de roulis est la différence entre le taux de lacet de consigne et le taux de lacet réel du véhicule tracteur.

5. Procédé selon la revendication 1, **caractérisé en ce que** la grandeur de roulis est le taux de lacet réel du véhicule tracteur.

6. Procédé selon la revendication 1, **caractérisé en ce que** l'intervention de freinage indépendante du conducteur est un freinage symétrique de la roue gauche et de la roue droite d'au moins un essieu du véhicule.

7. Procédé selon la revendication 1, **caractérisé en ce que** l'intervention de freinage indépendante du conducteur est un freinage alternatif de la roue gauche et de la roue droite d'au moins un essieu de véhicule, la position de phase du freinage alternatif étant choisie de telle sorte que le couple de lacet oscillant généré par l'intervention de freinage soit décalé d'environ 180° par rapport à la grandeur de roulis d'oscillations.

8. Procédé selon la revendication 1, **caractérisé en ce que** la première valeur seuil est choisie suffisamment basse pour qu'il n'existe encore pas de situation de roulis critique pour l'attelage de véhicule.

9. Dispositif contenant des moyens qui sont configurés pour mettre en oeuvre le procédé selon l'une quelconque des revendications 1 à 8.
